# EUROPEAN PATENT APPLICATION

(11) **EP 4 272 576 A1**
(43) Date of publication of application: **08.11.2023**
(21) Application number: 21915875.5
(22) Date of filing: 30.12.2021
(51) Int. Cl.: A23L 29/30, A23L 3/3418, B65D 81/20, B65D 25/14

(54) **ALLULOSE WITH IMPROVED STABILITY**

(30) Priority: 30.12.2020 KR 20200188451
(71) Applicant: Samyang Corporation, Jongno-gu Seoul 03129 (KR)
(72) Inventor: YANG, Jae-Kyung, Suwon-si, Gyeonggi-do 16698 (KR); KIM, Go-Eun, Gwangju-si, Gyeonggi-do 12777 (KR); PARK, Ji Won, Seongnam-si, Gyeonggi-do 13583 (KR); PARK, Chong Jin, Seoul 06723 (KR); HAN, Jung Sook, Anyang-si, Gyeonggi-do 14062 (KR)
(74) Representative: Schrell, Andreas
(86) International application number: PCT/KR2021/020285
(87) International publication number: WO 2022/146078

(57) **Abstract**

The present invention relates to an allulose storage package for increasing storage stability of allulose syrup and a method for increasing the storage stability of allulose.

## Description

### [TECHNICAL FIELD]

The present invention relates to an allulose storage package for increasing the storage stability of allulose syrup and a method for increasing the storage stability of allulose.

### [RELATED ART]

Allulose is an epimer of fructose (D-fructose) and a type of functional saccharide known as rare sugar. It has a high sweetness of about 60 to 70% of sugar, but has almost zero calories, so it is known to be effective in preventing and improving diabetes. In addition, allulose is known to have excellent solubility, so it is one of the materials attracting attention for use in food.

Recently, a biological method for producing allulose is to perform an allulose conversion reaction by contacting a fructose-containing substrate solution with allulose epimerization enzyme or a bacterium producing the enzyme. The fructose-containing solution used as the raw reaction material in the allulose conversion process may be a fructose isomerization reaction product obtained by an isomerization reaction of glucose obtained from the decomposed products of starch and the like. In addition, the reaction solution containing allulose is produced as a syrup or crystallized product after making a high-purity solution using chromatography.

Allulose is stored and distributed in the form of allulose syrup due to its low crystallinity, which makes it difficult to crystallize. Allulose syrup has a problem in that the allulose content gradually decreases as the storage period increases due to various influencing factors such as pH, temperature, and electrical conductivity.

When allulose syrup is stored for a long time, the content of allulose is lowered, and allulose may be converted or decomposed into other substances. The allulose conversion reaction product may be, for example, other saccharides such as fructose and the like, or furfural-type substance such as HMF. Accordingly, the allulose syrup is decomposed or converted to other substances during the storage period, and the allulose content gradually decreases.

### [DETAILED DESCRIPTION OF THE INVENTION]

### [TECHNICAL PROBLEM]

An embodiment of the present invention is to provide an allulose syrup with improved storage stability.

A further embodiment of the present invention is to provide an allulose storage package with improved storage stability of allulose, comprising an allulose syrup and a storage container.ca

A further embodiment of the present invention is to provide a method for increasing storage stability of allulose by having empty space in the storage container of allulose syrup, filling with nitrogen and/or optimizing the allulose storage container.

### [TECHNICAL SOLUTION]

The present invention relates to an allulose storage package for increasing the storage stability of allulose syrup and a method for increasing the storage stability of allulose. Specifically, the method for increasing the storage stability of allulose syrup according to the present invention is at least one selected from the group consisting of a method of adjusting empty space in the storage container to 20% or less, based on 100% of the whole volumetric capacity of the storage container, a method of filling the allulose storage container with nitrogen, and a method of reducing direct contact between allulose syrup wand the container material by making the contain of tin or tin alloy, and a polymer coating layer on inner surface of container.

According to the present invention, the storage stability of allulose syrup is improved to provide an allulose syrup in which the content of allulose is kept to the maximum under storage conditions such as storage and distribution from immediately after production. Herein, the storage stability of allulose syrup means that the allulose content contained in the allulose syrup is equal to the allulose content at immediately after preparation, or that the decrease in the allulose content is minimized, for example, based on 100% by weight of the solid content of allulose at immediately after preparation or zero(0) week of storage, the allulose content during the storage period is maintained at a content as close as possible to 100% by weight, for example, 99.9% by weight or more, 97% by weight or more, 95% by weight or more, 92.5% by weight or more or 90% by weight or more.

Hereinafter, the present invention will be described in more detail.

An embodiment of the present invention relates to an allulose storage package comprising a storage container and allulose syrup, wherein the alluose syrup may be filled so as for the volume of empty space excluding allulose to be 20% (v/v) or less, based on 100% (v/v) of the volume of the storage container.

In consideration of the storage stability of allulose, based on 100% (v/v) of the volumetric capacity of the storage container, the capacity (volume) of the empty space is 20% or less, 17.5% or less, 15% or less, 12.5% or less, 10% or less, .5% or less, or 6% or less. % or less, 7.5% or less, or 6% or less, for example, 1 to 20%, 1 to 17.5%, 1 to 15%, 1 to 12.5%, 1 to 1 to 10%, 1 to 7.5%, 1 to 6%, 1.5 to 20%, 1.5 to 17.5%, 1.5 to 15%, 1.5 to 12.5%, 1.5 to 10%, 1.5 to 7.5%, 1.5 to 6%, 2 to 20%, 2 to 17.5%, 2 to 15%, 2 to 12.5%, 2 to 10%, 2 to 7.5%, 2 to 6%, 2.5 to 20%, 2.5 to 17.5%, 2.5 to 15%, 2.5 to 12.5%, 2.5 to 10%, 2.5 to 7.5%, 2.5 to 6%, 3 to 20%, 3 to 17.5%, 3 to 15%, 3 to 12.5%, 3 to 10%, 3 to 7.5%, 3 to 6%, 3.5 to 20%, 3.5 to 17.5%, 3.5 to 15%, 3.5 to 12.5%, 3.5 to 10%, 3.5 to 7.5%, 3.5 to 6%, 4 to 20%, 4 to 17.5%, 4 to 15%, 4 to 12.5%, 4 to 10%, 4 to 7.5%, 4 to 6%, 4.5 to 20%, 4.5 to 17.5%, 4.5 to 15%, 4.5 to 12.5%, 4.5 to 10%, 4.5 to 7.5%, or 4.5 to 6%. The smaller the capacity of the empty space may be, the better it may be by considering the storage stability of allulose, but the capacity of the empty space is preferably set within an appropriate range by considering the possibility of volume expansion in storage.

The allulose storage container or keeping container applicable to the present invention includes a container body having a storage space formed inside thereof and an inlet which is connected to the storage space and formed upper side thereof, and a cover member which is detachably coupled to the inlet of the container body and seals the storage space. The shape or form of the container is not particularly limited.

In the allulose storage package according to the present invention, when allulose syrup is filled to 20% or less of the capacity of the empty space excluding allulose based on 100% of the capacity (volume) of the storage container or the keeping container of allulose syrup, under the conditions of a total storage period of 10 weeks of storage at 25 °C for 3 weeks followed by storage at 35 °C for 7 weeks, the relative allulose content of the allulose syrup is 99.9% by weight or more, 97% by weight or more, 95% by weight or more, 92.5% by weight or more, or 90% by weight or more, based on 100% by weight (wt%) of allulose content at zero (0) week of storage starting point.

The allulose syrup storage container according to an example of the present invention may be made of metal, metal alloy, or polymer material. When the container is made of metal or metal alloy material, the inner surface of the container is coated with a polymer, which is preferable to minimize direct contact of the allulose syrup. The coating on the inner surface of the container is preferably performed on the entire inner surface of the container, and the coating includes single coating, and multiple coating such as double, triple or more, and multiple coating such as double or more may be more preferable to minimize direct contact between the allulose syrup and the metal or metal alloy material. The metal or metal alloy material is not particularly limited as long as it is usable for food containers, and may be, for example, tin or tin alloy. The coating agent on the inner surface of the container is not particularly limited as long as it is a material usable for food containers, and may be, for example, an epoxyphenol-based resin being usable for food container, particularly a commercially -available product of Canguard 5K-872.

In the present invention, allulose may be provided in the form of an allulose syrup. For example, the allulose syrup may contain 0.1 to 100% by weight of allulose on a solid content, and for example may be a low-purity allulose syrup containing 1 to 50% by weight, 3 to 35% by weight, 3 to 25% by weight or 3 to 20% by weight of allulose content, or high-purity allulose syrup containing 70% by weight or more, 80% by weight or more, 85% by weight or more, 90% by weight or more, 95% by weight or more, 96% by weight or more, 97% by weight or more, or 99% by weight or more.

The viscosity and electrical conductivity of the allulose syrup can be set in various values, and if necessary, the allulose syrup obtained in the manufacturing process is injected into the storage container as it is. Alternatively, the allulose syrup obtained by adding a regulator for adjusting the viscosity and/or electrical conductivity or performing an additional process, is input to the container. For example, the viscosity of allulose syrup may be 2 cps to 200 cps at a temperature of 45 °C, and the electrical conductivity may be 1000 µS/cm or less, for example, 0.01 to 1000 µS/cm, preferably 200 µS/cm or less, 150 µS/cm or less, 100 µS/cm or less, 80 µS/cm or less, 50 µS/cm or less, 30 µS/cm or less, for examples, 0.1 to 200 µS/cm, 0.1 to 150 µS/cm, 0.1 to 100 µS/cm, 0.1 to 80 µS/cm, 0.1 to 50 µS/cm, or 0.1 to 30 µS/cm.

According to the present invention, pH of allulose syrup at the start of storage may be 3.8 or more and 5.5 or less, for example, 3.8 to 5.5 or less, 3.9 to 5.5 or less, 4.0 to 5.5 or less, 4.1 to 5.5 or less, 4.2 to 5.5 or less, 4.3 to 5.5 or less, 4.4 to 5.5 or less, 4.5 to 5.5 or less, 4.6 to 5.5 or less, 4.7 to 5.5 or less, or 4.8 to 5.5 or less.

In a specific example, the allulose syrup can be obtained by a manufacturing method comprising activated carbon treatment, SMB chromatography high purity separation, and ion purification process for a biologically obtained allulose-containing solution. A process of concentrating the allulose syrup may be further performed, or an ion purification process may be additionally performed before high-purity separation after performing the activated carbon treatment process of the allulose-containing solution. The ion purification process performed immediately after the activated carbon treatment process may be the same as or different from the ion purification process performed immediately after the high-purity separation process, and the ion exchange resin is not particularly limited.

The biologically obtained allulose-containing solution is obtained by culturing a microorganism producing allulose epimerase or a recombinant microorganism introduced by a gene encoding allulose epimerase, and reacting the microorganism producing the allulose epimerase, or the allulose epimerase with a fructose-containing raw material. The reaction of allulose epimerase may be performed in a liquid phase reaction or in a solid phase reaction using an immobilized enzyme. An example of the allulose conversion reaction is described in Korean Patent No.10-1318422.

The allulose-containing solution is subjected to SMB chromatography separation to separate an allulose fraction having a higher allulose content than the conversion reactant, and fructose raffinate, and the allulose fraction is subjected to an ion purification process to prepare an allulose syrup product, or to an additional concentration process to prepare a concentrated product. Separation/purification may be performed so that the content of psicose in the psicose fraction is 85% by weight or more, for example, 85% by weight to 95% (w/w) or more.

A preferred example of the present invention is an allulose storage package including a container and an allulose syrup, wherein the allulose syrup is filled to 20% or less of an empty space excluding allulose based on 100% of the container capacity. The empty space of the container is filled with nitrogen, the container is made of tin or tin alloy, and the inner surface may include a coating layer of epoxyphenol-based resin. More preferably, in the allulose storage package, pH of the allulose syrup at the start of storage may further have a pH of 3.8 or more to 5.5, and the allulose syrup may be a product obtained by carrying out a decolorization process using activated carbon for the allulose conversion reaction product using the substrate, a high-purity separation process using chromatograph column filled with an calcium (Ca²⁺⁾ type ion-exchange resin and ion-purification for the allulose fraction obtained from the high-purity separation. Accordingly, the allulose syrup contained in the allulose storage package may have a storage stability that an allulose content of allulose syrup is 90.0 % or more, or 92.5% or more under the conditions of storing for 4 weeks at °C.

### [EFFECT OF THE INVENTION]

According to an allulose storage package for increasing the storage stability of allulose syrup and a method for increasing the storage stability of allulose, even if the allulose syrup is stored and distributed for a long time, the allulose content reduction can be minimized by preventing decomposition of allulose or conversion to other substances.

### [DETAILED DESCRIPTION OF THE EMBODIMENTS]

The present invention will be described in more detail with reference to the following examples, but the scope of the present invention is not intended to be limited to the following examples.

### Example 1: Stability test for empty space volume of container

Allulose syrup (liquid sample) having a solid content of 70bx, an allulose purity of 97 wt/wt%, and a pH of 4.1 was injected into a 1L polyethylene sample container at 90% volume of the whole volume of the sample container (head space 10%) as Experimental group 1-1 and at 10% volume of the whole volume of the sample container (head space 90%) as Experimental group 1-2. The head space volume of the container was set by adjusting the weight of allulose to be injected in consideration of the density of allulose syrup and the volumetric capacity of the storage container.

The sample container filled with the prepared allulose was stored in an incubator at a temperature of 25 °C for 3 weeks, and then to quickly test the change, the samples were stored under the storage condition of 35 °C for the acceleration test, after sampling at 3^{rd} week. The allulose syrup under the storage condition of 35 °C was analyzed from the time of taking the sample from the 4th week. During the storage period, a small amount of allulose sample was taken at intervals of one week and diluted by 3bx with the addition of water to prepare an analysis sample.

The analysis sample was measured for allulose content by HPLC analysis. Specific HPLC analysis conditions were carried out using a 87C column (Biorad HPX-87C, 7.8mm Φ x 300mm) at a temperature of 80 °C, while flowing 100% of water as a mobile phase at a flow rate of 0.6 ml/min, and detected with an RI detector. Table 1 shows the result of measuring the allulose content (wt%) and change in the allulose content (wt%) of Experimental Group 1-1 (head space 10%) and Experimental Group 1-2 (head space 90%) according to the storage temperature and storage period of allulose.

**[Table 1]**

| Storage period (week) | storage temperature (°C) | Experimental group 1-1 | | Experimental group 1-2 | |
|---|---|---|---|---|---|
| | | content (wt%) | amount of change (wt%) | content (wt%) | amount of change (wt%) |
| Week 0 | 25 | 97 | 0.00 | 97 | 0.00 |
| 1 week | 25 | 96.8 | -0.20 | 96.9 | -0.10 |
| 2 weeks | 25 | 96.9 | +0.10 | 96.9 | -0.00 |
| 3 weeks | 25 | 96.8 | -0.10 | 96.7 | -0.20 |
| 4 weeks | 35 | 95.1 | -1.90 | 94.6 | -2.40 |
| 5 weeks | 35 | 94.5 | -2.50 | 92.2 | -4.80 |
| 6 weeks | 35 | 92.7 | -4.30 | 91.2 | -5.80 |
| 7 weeks | 35 | 91.9 | -5.10 | 90.1 | -6.90 |
| 8 weeks | 35 | 90.5 | -6.50 | 88.9 | -8.10 |
| 9 weeks | 35 | 90.2 | -6.80 | 87.2 | -9.80 |
| 10 weeks | 35 | 89.6 | -7.40 | 86.9 | -10.10 |

As shown in Table 1, based on 100% by weight of allulose content (wt%) at 0 week of storage, which is the starting point of storage, under the storage conditions for a total of 10 weeks, which was stored at 25 °C for 3 weeks and then stored at 35 °C for 7 weeks, the allulose content of Experimental group 1-1 (head space 10%) was 92.37% by weight, and the allulose content of Experimental group 1-2 (head space 90%) was 89.59% by weight. It was confirmed that the storage stability of Experimental group 1-1 having 10% of empty space was excellent with the allulose content of 90% or ml

As the volume of upper empty space (head space) of the storage container containing allulose syrup increased, the allulose solid content decreased rapidly. The reason for the decrease in the allulose content was confirmed that the larger of volume of the empty space caused the higher air content inside the container, so that allulose was more unstable and the allulose content was reduced to a greater extent.

### Example 2: Stabilization test for nitrogen filling

250 g of allulose syrup (liquid sample) having a solid content of 70 bx, an allulose purity of 97 wt/wt%, and a pH of 4.1 was injected into a polyethylene sample container with a volumetric capacity of about 250 mL so that 95% of the whole volume of the sample container was filled. Three sample containers were prepared. Thus, the empty space of the storage container for allulose syrup was 5% of the container capacity.

In the control experiment, the sample container filled with the allulose sample was sealed under atmospheric conditions and stored in an incubator at a temperature of 45 °C.

Experimental group 2-1 was an experimental group in which the air in the head space of the sample container filled with the allulose sample was replaced with nitrogen gas. After allulose syrup was input to the sample container, nitrogen gas ( a purity of 99 % or more) was filled into the container though a supply pipeline at 2L/min for 5 minutes, and the sample container was sealed and then stored in an incubator at 45 °C. In Experimental group 2-2, nitrogen gas ( a purity of 99 % or more) was inserted into the allulose syrup of the container at 2L/min for 5 minutes though a supply pipeline that was injected into the inside of allulose syrup, and the sample container was sealed and then stored in an incubator at 45 °C.

For the control group, Experimental group 2-1, and Experimental group 2-2, small amounts of allulose samples were taken at intervals of one week during the storage period, and diluted to be 3bx with the addition of water to prepare analysis samples. The analysis sample was measured for allulose content by HPLC analysis. Specific HPLC analysis conditions were carried out using a 87C column (Biorad HPX-87C, 7.8mm Φ x 300mm) at a temperature of 80 °C, while flowing 100% of water as a mobile phase at a flow rate of 0.6 ml/min, and detected with an RI detector. Table 2 shows the result of measuring the allulose content (wt%) and change in the allulose content (wt%) of Control group (air contained in the head space), Experimental Group 2-1 (nitrogen gas injected to the head space) and Experimental Group 2-2 (nitrogen gas injected to the inside of allulose syrup) according to the storage period of allulose.

**[Table 2]**

| Storage period | control group | | Experimental group 2-1 | | Experimental group 2-2 | |
|---|---|---|---|---|---|---|
| | Content (wt%) | Amount of Change (wt%) | Content (wt%) | Amount of Change (wt%) | Content (wt%) | Amount of Change (wt%) |
| 0 week | 96.50% | 0 | 96.50% | 0 | 96.50% | 0 |
| 1 week | 93.80% | -2.70% | 93.40% | -3.10% | 93.40% | -3.10% |
| 2 weeks | 91.70% | -2.10% | 91.50% | -1.90% | 91.40% | -2.00% |
| 3 weeks | 89.80% | -1.90% | 90.90% | -0.60% | 91.00% | -0.40% |

As shown in the experimental results of Table 2, it was confirmed that the Experimental group 2-1 and Experimental group 2-2, which were filled with nitrogen, showed a small decrease in the allulose content, compared to the control experiment in which nitrogen was not filled during the 3 week storage period. The reason for the decrease in allulose content is that substances such as carbon dioxide and oxygen contained in the air react with allulose, resulting in a decrease in content.

Experimental group 2-1 in which nitrogen was injected into the head space of the sample container filled with the allulose syrup and Experimental group 2-2 in which nitrogen was injected into the allulose syrup showed a smaller decrease in allulose content than the control group, and they showed no large difference according to the nitrogen filling method, but Experimental group 2-2, in which nitrogen was injected into the inside of allulose syrup, was preferable because it had the effect of reducing the air in the allulose syrup.

### Example 3: Stability test for container inner material

As a storage container for allulose syrup having a volumetric capacity of 20L, the cylindrical container double-coated with Canguard 5K-872 (epoxyphenol based resin) on the entire inner surface and made of tin (TIN) material was used as Experiment 3-1, the cylindrical container single-coated with Canguard 5K-872 (epoxyphenol based resin) on the entire inner surface and made of tin (TIN) material was used as Experiment 3-2, the cylindrical container single-coated with Canguard 5K-872 (epoxyphenol based resin) on the inner surface of wall (side face) and made of tin (TIN) material was used as Experiment 3-3, and the container made of polyethylene material (Experiment 3-4) was prepared. Canguard 5K-872 (epoxyphenol based resin) is a paint that can be coated for food use in Korea.

20 kg of allulose syrup having a solid content of 70 bx, an allulose purity of 97 wt/wt%, and a pH of 4.1 was filled into the prepared four storage containers, so that the head space capacity was 5% based on 100 % of the storage capacity of each storage container. The containers were sealed, and stored in an incubator at a temperature of 45 °C in the air for 10 weeks without nitrogen filling.

During the storage period, a small amount of allulose sample was taken at intervals of one week and diluted to be 3bx with the addition of water to prepare an analysis sample. The analysis sample was measured for allulose content by HPLC analysis. Specific HPLC analysis conditions were carried out using a 87C column (Biorad HPX-87C, 7.8mm Φ x 300mm) at a temperature of 80 °C, while flowing 100% of water as a mobile phase at a flow rate of 0.6 ml/min, and detected with an RI detector.

**[Table 3]**

| sample | Experimental group 3-1 | | Experimental group 3-2 | | Experimental group 3-3 | | Experimental group 3-4 | |
|---|---|---|---|---|---|---|---|---|
| storage time (week) | content (wt%) | amount of change (wt%) | content (wt%) | amount of change (wt%) | content (wt%) | amount of change (wt%) | content (wt%) | amount of change (wt%) |
| 0 | 98.00% | 0.00% | 98.00% | 0.00% | 98.00% | 0.00% | 98.00% | 0.00% |
| 1 | 96.40% | -1.60% | 96.00% | -2.00% | 96.00% | -2.00% | 95.90% | -2.10% |
| 2 | 94.50% | -3.50% | 94.00% | -4.00% | 93.80% | -4.20% | 93.80% | -4.20% |
| 3 | 93.00% | -5.00% | 92.60% | -5.40% | 92.20% | -5.80% | 92.40% | -5.60% |
| 4 | 92.40% | -5.60% | 92.40% | -5.60% | 91.70% | -6.30% | 91.90% | -6.10% |
| 5 | 91.20% | -6.80% | 90.80% | -7.20% | 90.50% | -7.50% | 90.50% | -7.50% |
| 6 | 90.60% | -7.40% | 90.10% | -7.90% | 90.00% | -8.00% | 89.80% | -8.20% |
| 7 | 90.90% | -7.10% | 90.70% | -7.30% | 90.40% | -7.60% | 89.90% | -8.10% |
| 9 | 90.60% | -7.40% | 90.80% | -7.20% | 90.10% | -7.90% | 90.00% | -8.00% |
| 10 | 89.50% | -8.50% | 89.10% | -8.90% | 88.60% | -9.40% | 88.30% | -9.70% |

Compared to the container coated in side face of Experimental Group 3-3 and the polyethylene container of Experimental Group 3-4, the reduction in the allulose content was small in the containers coated in whole inner surface such as Experimental Groups 3-1 and 3-2. When coating the entire inner surface of the sample container, the contact area between the TIN material and allulose was reduced. Thus, it was confirmed that the decrease in content due to allulose decomposition was less affected. In addition, it was confirmed that the double-coated container (Experimental group 3-1) showed less decrease than the single-coated container (Experimental group 3-2) among the entire surface coating groups, and the stability of the allulose content increased as the area in contact with the TIN material decreased.

## Claims

1. An allulose storage package comprising a container and an allulose syrup, wherein the alluose syrup is filled so as for volume of empty space excluding allulose syrup to be 20% or less based on 100% of volumetric capacity of the container.

2. The allulose storage package of claim 1, wherein the allulose content of the allulose syrup stored under the condition of a total 10-week storage period at storage 25 °C for 3 weeks followed by storage at 35 °C for 7 weeks, is at least 90% by weight, based on 100% by weight(wt%) of allulose content at zero week of storage.

3. The allulose storage package of claim 1, wherein the container is filled with nitrogen.

4. The allulose storage package of any one of claims1 to 3, wherein nitrogen gas is injected into the empty space or into the allulose syrup of container.

5. The allulose storage package of any one of claims 1 to 4 , wherein the container is made of metal or metal alloy, and includes a polymer coating layer formed on an inner surface.

6. The allulose storage package according to claim 5, wherein the container is made of tin or tin alloy, and includes a coating layer of epoxyphenol-based resin formed on an inner surface of the container.

7. The allulose storage package of any one of Claims 1 to 6 , wherein the allulose syrup has an allulose content of 5% by weight or more, based on 100% by weight of the total solid content of the syrup.

8. The allulose storage package of any one of Claims 1 to 7 , wherein the allulose syrup has a pH of 3.8 or higher at immediately after preparation.

9. The allulose storage package of any one of claims 1 to 8, wherein the allulose syrup is an allulose syrup obtained by performing decolorization process using activated carbon for a product of an allulose conversion reaction using a fructose substrate, a high-purity separation process using chromatograph colume filled with calcium (Ca²⁺) type ion-exchange resin, and ion purification process for an allulose fraction obtained in the high-purity separation process.

10. A method of increasing storage stability of allulose, comprising filling with allulose syrup to 20% or less of empty space volume excluding allulose syrup, based on 100% of volume of a container, in an allulose storage package including a container and allulose syrup.

11. The method of claim 10, wherein the allulose content of the allulose syrup stored under the condition of a total 10-week storage period at storage 25 °C for 3 weeks followed by storage at 35 °C for 7 weeks, is at least 90% by weight, based on 100% by weight(wt%) of allulose content at zero week of storage.

12. The method of claim 10 , wherein a nitrogen filling is performed .

13. The method of claim 10 , wherein the container is made of a metal or metal alloy material and includes a polymer coating layer formed on an inner surface.
